# EUROPÄISCHE PATENTANMELDUNG

(11) **EP 2 720 009 A1**
(43) Veröffentlichungstag der Anmeldung: **16.04.2014**
(21) Anmeldenummer: 13183957.3
(22) Anmeldetag: 11.09.2013
(51) Int. Cl.: G01G 19/12, G01G 19/04, G01G 23/37

(54) **Wiegevorrichtung und Wiegeverfahren zur Ermittlung der Zuladungsmasse eines Fahrzeugs sowie Fahrzeug mit einer derartigen Wiegevorrichtung**

(30) Priorität: 15.10.2012 DE 102012109805
(71) Anmelder: GWM Gesellschaft Wiegen + Messen mbH, 28865 Lilienthal (DE); Siebert, Alexander, 28355 Bremen (DE)
(72) Erfinder: Siebert, Alexander, 28865 Lilienthal (DE); Tegtmeier, Monika, 28865 Lilienthal (DE)
(74) Vertreter: Wasiljeff, Johannes M.B.

(57) **Zusammenfassung**

Die Erfindung betrifft eine Wiegevorrichtung (10) zur Ermittlung der Zuladungsmasse eines Fahrzeugs (50). Die Wiegevorrichtung (10) umfasst ein oder mehrere Messmodule (14) mit einem oder mehreren Dehnungsmessstreifen (34), wobei mit den Dehnungsmessstreifen (34) die Zuladungsmasse eines Fahrzeugs (50) abhängig von der Verformung eines oder mehrerer Bauteile des Fahrzeugs (50) ermittelt wird. Hierzu sind die Dehnungsmessstreifen (34) mit den Bauteilen des Fahrzeugs (50) verbindbar. Die Messmodule (14) sind kabellos oder kabelgebunden mit einer zentralen Steuereinheit (12) verbunden, wobei die zentrale Steuereinheit (12) zur Ermittlung der Zuladungsmasse anhand der mit den Messmodulen (14) ermittelten Verformungen dient. Ferner sind Ausgabemittel (16) mit der zentralen Steuereinheit (12) entweder kabellos oder kabelgebunden verbunden. Die Ausgabemittel (16) dienen zur optischen Signalisierung von Informationen die abhängig von der mittels der zentralen Steuereinheit (12) ermittelten Zuladungsmasse sind.

Ferner betrifft die Erfindung ein Wiegeverfahren zum Ermitteln der Zuladungsmasse eines Fahrzeugs (50) mit der erfindungsgemäßen Wiegevorrichtung (10) sowie ein Fahrzeug (50) mit der erfindungsgemäßen Wiegevorrichtung (10).

## Beschreibung

Die Erfindung betrifft eine Wiegevorrichtung zur Ermittlung der Zuladungsmasse eines Fahrzeugs nach Anspruch 1 und ein Verfahren zum Ermitteln der Zuladungsmasse eines Fahrzeugs nach Anspruch 10. Ferner betrifft die Erfindung ein Fahrzeug mit einer Wiegevorrichtung nach Anspruch 9.

Bei der Beladung von Fahrzeugen ist es notwendig, das Gewicht bzw. die Zuladungsmasse eines Fahrzeugs zu ermitteln, um z.B. eine Überladung des Fahrzeugs zu verhindern. Die Zuladungsmasse eines Fahrzeugs entspricht der Masse, mit der das Fahrzeug beladen ist. Im Falle eines Schienenfahrzeugs, z.B. eines Flachwagens zum Transport von Holz, entspricht die Zuladungsmasse z.B. dem Gewicht des auf den Flachwagen aufgeladenen Holzes. Ist das Fahrzeug etwa als Silofahrzeug ausgebildet, so entspricht die Zuladungsmasse dem Schüttgut, das in den Silo des Silofahrzeugs eingebracht ist.

Zur Zuladungsmasse kann auch das Gewicht von Personen zählen, die mit Verkehrsflugzeugen transportiert werden. In diesem Fall zählen zur Zuladungsmasse z.B. auch Lebensmittel sowie Wasserreserven und Treibstoff, die für den Flugverkehr benötigt werden. Allgemein bezeichnet die Zuladungsmasse also die Masse, die ausgehend von einem vordefinierten Gewichtswert, z.B. dem Eigengewicht des als unbeladen betrachteten Fahrzeugs, in oder auf das Fahrzeug geladen wird.

Herkömmlicherweise wird die Zuladungsmasse von Fahrzeugen, wie z.B. von Lastkraftwagen oder von Eisenbahnfahrzeugen, mittels fest in den Boden installierter Brückenwaagen, z.B. Strassenbrückenwaagen oder Gleisbrückenwaagen, ermittelt. Bei Brückenwaagen wird die Fahrbahn bzw. werden die Schienen in zwei Bereichen unterbrochen, wobei der Bereich zwischen den Unterbrechungen auf einer Vorrichtung gelagert ist. Mit der Vorrichtung wird dann das Gewicht eines im Bereich zwischen den Unterbrechungen positionierten Fahrzeugs bestimmt.

Derartige Brückenwaagen sind fest im Bereich einer Ladeanlage, wie z.B. im Bereich einer Laderampe oder im Bereich eines Ladegleises installiert. Eine Bestimmung der Zuladungsmasse eines Fahrzeugs unabhängig von einem Ort ist daher mit derartigen Waagen nicht möglich.

Ferner wird das Gewicht auch mit Achslastwaagen bestimmt, die im Gegensatz zu Brückenwaagen auch in Ausführungen bekannt sind, die nicht fest mit einem Ort verbunden sind. Mit einer Achslastwaage wird die Zuladungsmasse des Fahrzeugs, welches über jede einzelne Achse auf den Untergrund übertragen wird, durch aufeinanderfolgendes Positionieren der Achsen auf einer Wiegefläche der Achslastwaage ermittelt. Nach der Ermittlung des Gewichts der einzelnen Achsen, werden die Gewichte zum Gesamtgewicht des Fahrzeugs addiert.

Sollen mit einer Achslastwaage Fahrzeuge mit großer Zuladekapazität gewogen werden, so muss die Wiegefläche der Achslastwaage groß sein. Grund hierfür ist, dass Fahrzeuge mit großer Zuladekapazität Doppelachsen aufweisen. Um ein brauchbares Messergebnis mit Achslastwaagen bei Doppelachsen zu erhalten, müssen alle Räder einer Doppelachse gleichzeitig auf der Wiegefläche positioniert werden.

Daraus resultiert, dass auch eine Achslastwaage, zumindest wenn Sie für Fahrzeuge mit großer Zuladekapazität geeignet sein soll, nur mit großem Aufwand an verschieden Orten eingesetzt werden kann.

Gerade im Bereich von Ladegütern, die nicht immer am gleichen Ort verladen werden, ist jedoch ein mobiles Wiegesystem wünschenswert, welches zur Sicherung von Fahrzeugen vor Überladung dient.

Der Erfindung liegt daher die Aufgabe zugrunde, die Zuladungsmasse eines Fahrzeugs in einfacher Weise unabhängig von einem Ort zu bestimmen.

Die Erfindung löst diese Aufgabe durch eine Wiegevorrichtung zur Ermittlung der Zuladungsmasse eines Fahrzeugs gemäß Anspruch 1 sowie ein Fahrzeug mit einer derartigen Wiegevorrichtung gemäß Anspruch 9 und ein Wiegeverfahren zum Ermitteln der Zuladungsmasse eines Fahrzeugs mit einer Wiegevorrichtung gemäß Anspruch 10.

Die erfindungsgemäße Wiegevorrichtung zur Ermittelung der Zuladungsmasse eines Fahrzeugs umfasst ein oder mehrere Messmodule, wobei das bzw. jedes der Messmodule einen oder mehrere Dehnungsmessstreifen aufweist. Die Dehnungsmessstreifen der Messmodule sind derart ausgebildet, um jeweils mit einem oder mit mehreren Bauteilen des Fahrzeugs, dessen Zuladungsmasse gemessen bzw. ermittelt werden soll, verbunden zu werden. Die Messmodule mit den Dehnungsstreifen dienen zur Ermittlung der Verformung bzw. der Dehnung oder Stauchung des bzw. der Bauteile, mit dem bzw. denen der jeweilige Dehnungsmessstreifen verbunden wird bzw. ist.

Ferner weist die Wiegevorrichtung eine zentrale Steuereinheit auf, die entweder kabellos, z.B. über eine Funkverbindung, oder kabelgebunden, z.B. über eine geschirmte elektrische Leitung, mit dem oder den Messmodulen verbunden ist. Die Steuereinheit dient zur Ermittlung der Zuladungsmasse mittels der mit den Messmodulen und den Dehnungsmessstreifen ermittelten Verformungen bzw. Dehnungen und/oder Stauchungen.

Mit jedem Messmodul wird also eine Verformung bzw. eine Dehnung oder Stauchung eines oder mehrerer Bauteile des Fahrzeugs ermittelt und diese Verformung z.B. als Messwert, also als ein Maß oder als ein Grad der Verformung bzw. der Dehnung oder Stauchung, mit Signalen an die zentrale Steuereinheit übermittelt. In der zentralen Steuereinheit wird dann anhand der ermittelten Verformungen, also anhand der die Verformung darstellenden Messwerte bzw. Signale einiger oder alle Messmodule, die Zuladungsmasse des Fahrzeugs ermittelt.

Zudem umfasst die Wiegevorrichtung eine oder mehrere Ausgabemittel zur akustischen und/oder optischen Signalisierung und/oder Anzeige von Informationen, die ebenfalls kabellos, also z.B. über Funk, oder kabelgebunden mit der zentralen Steuereinheit verbunden sind. Das bzw. die Ausgabemittel dienen zur Anzeige und/oder Signalisierung von Informationen, wobei diese Informationen abhängig von der mittels der zentralen Steuereinheit ermittelten Zuladungsmasse sind bzw. die Zuladungsmasse repräsentieren.

Mindestens ein Ausgabemittel ist gemäß einer Ausführungsform der Erfindung derart ausgebildet, um Informationen anzuzeigen, die absoluten Werten, also z.B. der Zuladungsmasse eines Fahrzeugs in Gramm, Kilogramm, Zentner oder Tonnen, entsprechen. Ferner ist gemäß einer weiteren Ausführungsform mindestens ein Ausgabemittel derart ausgebildet, um die Informationen nach Art einer Ampel zu signalisieren. Im Fall eines als Ampel ausgebildeten Ausgabemittels werden die Informationen z.B. durch das Leuchten verschiedenfarbiger Leuchtmittel dargestellt. Die Informationen entsprechen dann verschiedenen Bereichen verschiedener Zuladungsmassen. Ein grünes Leucht- oder Blinkzeichen signalisiert bei dieser Ausführungsform etwa, dass die von der zentralen Steuereinheit ermittelte Zuladungsmasse unterhalb eines vorbestimmten ersten Grenzwertes liegt. Beim weiteren Beladen des Fahrzeugs und des dadurch hervorgerufenen

Überschreitens dieses ersten Grenzwertes erlischt dann das grüne Leucht- oder Blinkzeichen des Ausgabemittels und ein oranges Leucht- oder Blinkzeichen zeigt das Überschreiten dieses ersten Grenzwertes an. Beim Überschreiten eines zweiten Grenzwertes erlischt dann das gelbe Leucht- oder Blinkzeichen und ein rotes Leucht- oder Blinkzeichen signalisiert das Überschreiten des zweiten Grenzwertes. Außerdem weist gemäß weiteren Ausführungsformen mindestens ein Ausgabemittel mehr oder weniger als drei Leucht- oder Blinkzeichen auf.

Ferner zeigt mindestens ein Ausgabemittel gemäß einer weiteren Ausführungsform eine relative Zuladungsmasse des Fahrzeugs an. Das Ausgabemittel gemäß der letztgenannten Ausführungsform zeigt z.B. Werte zwischen null und einhundert Prozent an. Eine angezeigte Information mit dem Wert null Prozent bedeutet, dass bislang keine Zuladung stattgefunden hat. Bei Erreichen eines angezeigten Wertes von einhundert Prozent ist das Fahrzeug dann bis zu einer vordefinierten Ladegrenze mit einer maximalen Zuladungsmasse beladen. Gemäß weiteren Ausführungsformen werden weitere Ausgabemittel zur Signalisierung und/oder Anzeige, insbesondere zur optischen aber auch zur akustischen Signalisierung und/oder Anzeige, von Informationen, die abhängig von der mittels der zentralen Steuereinheit ermittelten Zuladungsmasse sind, realisiert.

Ferner umfasst die Erfindung ein Fahrzeug, das eine Ausführungsform der erfindungsgemäßen Wiegevorrichtung aufweist. Das Fahrzeug ist z.B. ein Schienenfahrzeug, wie etwa ein Waggon oder Güterwaggon, wobei das Fahrzeug gemäß weiteren Ausführungsformen ein beliebiges Landfahrzeug, wie z.B. ein Lkw, oder ein Luftfahrzeug, wie z.B. ein Flugzeug, ist. Das erfindungsgemäße Fahrzeug weist Komponenten der Wiegevorrichtung, nämlich insbesondere ein oder mehrere Messmodule mit jeweils mindestens einem Dehnungsmessstreifen, eine zentrale Steuereinheit und ein oder mehrere Ausgabemittel auf.

Die Dehnungsmessstreifen der Wiegevorrichtung sind gemäß dem erfindungsgemäßen Fahrzeug derart mit dem Fahrzeug verbunden, dass die Dehnungsmessstreifen Verbiegungen bzw. Dehnungen und/oder Stauchungen von einem oder mehreren Bauteilen des Fahrzeugs aufnehmen, die abhängig von der Zuladungsmasse des Fahrzeugs sind. Bauteile des Fahrzeugs entsprechen jedem belieben Bestandteil des Fahrzeugs, welches sich abhängig von der Belastung des Fahrzeugs mit einer Zuladungsmasse verformt. Als Bauteile bzw. als geeignete Bauteile des Fahrzeugs sind insbesondere Teile des bzw. der Fahrgestelle des Fahrzeugs zu betrachten.

Gemäß einer Ausführungsform ist das Fahrzeug z.B. ein Schienenfahrzeug und die Dehnungsmessstreifen der Wiegevorrichtung sind mit Teilen bzw. Bauteilen des Drehgestells des Schienenfahrzeugs verbunden.

Das Aufnehmen der Verbiegung bzw. Dehnung und/oder Stauchung eines oder mehrerer Bauteile durch die Dehnungsmessstreifen bedeutet, dass der bzw. jeder der Dehnungsmessstreifen derart mit einem Bauteil verbunden ist, dass eine Verbiegung bzw. Dehnung und/oder Stauchung des Bauteils dieselbe oder weitestgehend dieselbe Verbiegung bzw. Dehnung und/oder Stauchung des mit dem Bauteil verbundenen Dehnungsmessstreifens an diesem Dehnungsmessstreifen hervorruft.

Gemäß einer Ausführungsform werden, unabhängig von der Position der Bauteile, vorzugsweise Bauteile zum Anbringen der Dehnungsmessstreifen gewählt, die im Verhältnis zu anderen Bauteilen des Fahrzeugs eine weitestgehend lineare Abhängigkeit der Verbiegung von den Werten der Zuladungsmasse des Fahrzeugs aufweisen. Gemäß einer weiteren Ausführungsform wird ein Bauteil zum Anbringen der Dehnungsmessstreifen gewählt, das eine maximale Verbiegung bzw. Dehnung im Vergleich zu anderen Bauteilen des Fahrzeugs bei bestimmten, mehreren oder allen Werten der Zuladungsmasse des Fahrzeugs aufweist.

Ferner umfasst die Erfindung ein Wiegeverfahren zum Ermitteln der Zuladungsmasse eines Fahrzeugs mit der erfindungsgemäßen Wiegevorrichtung bzw. zum

Ermitteln der Zuladungsmasse des erfindungsgemäßen Fahrzeugs. Das Wiegeverfahren umfasst ein Ermitteln der von der Zuladungsmasse abhängigen Verformung bzw. Dehnung und/oder Stauchung eines oder mehrer Bauteile des Fahrzeugs mittels einem oder mehreren Messmodulen mit jeweils einem oder mehreren Dehnungsmessstreifen.

Weiter umfasst das erfindungsgemäße Wiegeverfahren ein Ermitteln der Zuladungsmasse mit einer zentralen Steuereinheit. Die zentrale Steuereinheit ermittelt die Zuladungsmasse mittels der Verformungen bzw. Dehnungen und/oder Stauchungen, die mit dem oder den Messmodulen und dem oder den Dehnungsmessstreifen ermittelt wurden.

Zudem umfasst das erfindungsgemäße Wiegeverfahren ein Signalisieren und/oder Anzeigen von Informationen mit einem oder mehreren Ausgabemitteln, wobei die Informationen abhängig von der mittels der zentralen Steuereinheit ermittelten Zuladungsmasse sind. Die Informationen repräsentieren somit die Zuladungsmasse bzw. den Wert der Zuladungsmasse, also das Gewicht der Zuladung.

Dank der Erfindung ist es möglich auf stationäre Waagen zur Ermittlung der Zuladungsmasse eines Fahrzeugs zu verzichten. Eine Bestimmung der Zuladungsmasse eines Fahrzeugs ist somit unabhängig von einem Ort möglich. Ferner ermöglicht die Erfindung einen Überladungsschutz des Fahrzeugs an jedem beliebigen Ort, wobei auch während der Fahrt des Fahrzeugs die Zuladungsmasse regelmäßig geprüft werden kann. Somit ist zu jedem Zeitpunkt auch feststellbar, dass die Zuladung eines Fahrzeugs weiterhin vollständig ist. Ein Verlust des bei der Fahrt verlorengegangenen Ladegutes kann somit bereits während der Fahrt detektiert werden.

Gemäß einer Ausführungsform der Erfindung weist die Wiegevorrichtung einen oder mehrere Energiespeicher zur Energieversorgung der Wiegevorrichtung auf. Die Wiegevorrichtung wird also mit der Energie der Energiespeicher versorgt. Ein Energiespeicher ist z.B. eine Batterie, ein Akkumulator und/oder ein Kondensator.

Im Falle, dass der Energiespeicher ein wiederaufladbarer Energiespeicher ist, wie ein Akkumulator und/oder ein Kondensator, weist die Vorrichtung Lademittel zum Laden des wiederaufladbaren Energiespeichers auf. Der Energiespeicher wird dabei z.B. durch induktive, kapazitive oder kabelgebundene Verbindung des Lademittels mit einer externen Energiequelle mit Energie aufgeladen.

Der Vorteil von Energiespeichern bzw. einer Energieversorgung mit Energiespeichern ist eine autarke Einsetzbarkeit der Wiegevorrichtung, z.B. auch an abgekuppelten Anhängern eines Lastkraftwagens, die ohne ihre Zugfahrzeuge ohne Energieversorgung sind, oder an Eisenbahnfahrzeugen, insbesondere an Güterwaggons, die üblicherweise über keine eigene Energieversorgung verfügen.

Gemäß einer weiteren bevorzugten Ausführungsform der Erfindung weisen die Messmodule jeweils mindestens eine Referenzquelle zur Spannungs- oder Stromversorgung des oder der Dehnungsmessstreifen des jeweiligen Messmoduls mit einer weitestgehend konstanten Spannung bzw. einem weitestgehend konstanten Strom auf. Die Referenzquelle ist also entweder eine Referenzspannungsquelle oder eine Referenzstromquelle. Im Falle einer Referenzspannungsquelle wird eine weitestgehend konstante Spannung für den Dehnungsmessstreifen zur Verfügung gestellt. Durch Ermitteln des durch den Dehnungsmessstreifen fließenden Stromes ist dann eine Verformung des Dehnungsmessstreifens feststellbar. Im Falle einer Referenzstromquelle wird ein weitestgehend konstanter Strom für den Dehnungsmessstreifen zur Verfügung gestellt. Durch Ermitteln der über dem Dehnungsmessstreifen abfallenden Spannung ist dann eine Verformung des Dehnungsmessstreifens feststellbar.

Gemäß einer weiteren bevorzugten Ausführungsform der Erfindung weisen die Messmodule jeweils mindestens ein analoges Filter, insbesondere ein Tiefpassfilter, zum Herausfiltern von Signalanteilen des durch den Dehnungsmessstreifen fließenden Stromes und/oder der über dem Dehnungsmessstreifen abfallenden Spannung auf.

Im Falle einer Referenzstromquelle werden somit mittels des Filters z.B. Frequenzen der über dem Dehnungsmessstreifen abfallenden Spannung, die nicht von einer Verformung des Dehnungsmessstreifen verursacht wird, herausgefiltert. Im Falle einer Referenzspannungsquelle werden z.B. Frequenzen des durch den Dehnungsmessstreifen fließenden Stromes, der nicht von einer Verformung des Dehnungsmessstreifen verursacht werden, herausgefiltert. Ungewünschte auftretende Frequenzen der Signale der Dehnungsmessstreifen werden somit unterdrückt.

Gemäß einer weiteren bevorzugten Ausführungsform der Erfindung weisen die Messmodule jeweils mindestens einen Analog-Digital-Wandler auf. Der AnalogDigital-Wandler dient zum Umwandeln des mit dem Filter gefilterten oder des ungefilterten durch den Dehnungsmessstreifen fließenden Stromes und/oder der mit dem Filter gefilterten oder der ungefilterten über dem Dehnungsmessstreifen abfallenden Spannung in ein digitales Signal.

Im Falle einer Referenzstromquelle wird, insbesondere beim Einsatz eines analogen Filters, die analog gefilterte über dem Dehnungsmessstreifen abfallende Spannung in ein digitales Signal gewandelt oder es wird, insbesondere ohne den Einsatz eines analogen Filters, die über dem Dehnungsmessstreifen abfallende Spannung in ein digitales Signal gewandelt. Im Falle einer Referenzspannungsquelle wird, insbesondere beim Einsatz eines analogen Filters, der analog gefilterte durch den Dehnungsmessstreifen fließende Strom in ein digitales Signal gewandelt oder es wird, insbesondere ohne den Einsatz eines analogen Filters, der durch den Dehnungsmessstreifen fließende Strom in ein digitales Signal gewandelt.

Dank der Analog-Digital-Wandlung ist die weitere Verarbeitung der Signale der Dehnungsmessstreifen z.B. energiesparend mit einer Software in einem Mikrocontroller möglich. Ferner ist auch die Übertragung der Signale ohne bzw. mit nur geringen Störungen möglich.

Gemäß einer weiteren bevorzugten Ausführungsform der Erfindung weisen die Messmodule jeweils mindestens ein digitales Filter zur Filterung der digitalen Signale auf. Mit dem digitalen Filter werden z.B. digitalisierte Werte des durch den Dehnungsmessstreifen fließenden Stromes und/oder der über dem Dehnungsmessstreifen abfallenden Spannung herausgefiltert, die in einem betrachteten Zeitfenster im Vergleich zu den übrigen Werten des Zeitfensters von den übrigen Werten abweichen. Ferner werden die digitalisierten Werte des durch den Dehnungsmessstreifen fließenden Stromes und/oder der über dem Dehnungsmessstreifen abfallenden Spannung eines vordefinierten Zeitfensters oder mehrerer aufeinanderfolgender Zeitfenster z.B. einer Mittelwertbildung mit dem digitalen Filter unterzogen, sodass nach der Filterung pro Zeitfenster nur noch ein Wert verbleibt, der weiterverarbeitet werden kann.

Mittels des digitalen Filters sind somit eine Bereinigung des digitalen Signals von fehlerhaften Werten und eine Reduzierung der Datenmenge möglich.

Gemäß einer weiteren bevorzugten Ausführungsform der Erfindung weisen die Messmodule Temperaturkompensationsmittel mit einem Temperaturfühler auf. Mit dem Temperaturfühler wird die Umgebungstemperatur des Messmoduls bzw. des oder der Dehnungsmessstreifen des jeweiligen Messmoduls ermittelt und eine Schwankung bzw. eine Variation der digitalisierten Werte, die aufgrund des temperaturabhängigen Verhaltens der Dehnungsmessstreifen auftritt, kompensiert. Die Messmodule ermitteln somit eine Verformung des bzw. der Dehnungsmessstreifen, wobei die die Verformung repräsentierenden Werte weitestgehend frei von Fehlern durch Temperaturschwankungen sind.

Gemäß einer weiteren vorteilhaften Ausführungsform der Erfindung weist die zentrale Steuereinheit ein Modulüberwachungsmittel auf. Mit dem Modulüberwachungsmittel werden die Werte bzw. Signale eines, mehrer oder aller Messmodule, die die Verformungen der Bauteile repräsentierenden, mit denen die jeweiligen Messmodule verbunden sind, aufgezeichnet. Ferner dient das Modulüberwachungsmittel, um fehlerhafte Werte oder Signale zu detektieren. Hierzu werden aktuelle von dem oder den Messmodulen an die zentrale Steuereinheit übertragene Werte bzw. Signale, mit den Werten bzw. Signalen verglichen, die zeitlich vor den aktuellen Werten bzw. Signalen der zentralen Steuereinheit zugeführt worden sind. Somit können z.B. große Schwankungen bzw. Variationen der Werte bzw. Signale detektiert werden.

Ferner ist es mit dem Modulüberwachungsmittel möglich, fehlerhafte Werte bzw. Signale zu korrigieren bzw. die nicht fehlerhaften Werte bzw. Signale zu rekonstruieren. Dazu wird der aktuelle Zuladungszustand oder Zuladungsvorgang erkannt, indem der zeitliche Verlauf der zuletzt aufgezeichneten Werte bzw. Signale mit zuvor aufgezeichneten zeitlichen Verläufen von Werten bzw. Signalen vorhergehender Zuladungszustände oder Zuladungsvorgänge verglichen wird. Die fehlerhaften Werte bzw. Signale werden dann durch die Werte bzw. Signale eines vergleichbaren aufgezeichneten Zuladungszustandes oder Zuladungsvorganges ersetzt.

Es ist somit möglich, auch beim Ausfall eines oder mehrerer Dehnungsmessstreifen bzw. Messmodule eine zuverlässige Ermittlung der Zuladungsmasse eines Fahrzeugs durchzuführen.

Gemäß einer weiteren vorteilhaften Ausführungsform der Erfindung ist die zentrale Steuereinheit mit dem oder den Ausgabemitteln mittels eines Bussystems verbunden. Ferner ist die zentrale Steuereinheit mit dem oder den Messmodulen mittels des gleichen oder eines weiteren Bussystems verbunden. Hierbei weist das bzw. jedes der Bussysteme, gemäß einer spezielleren Ausführungsform, zwei Spannungsversorgungsleitungen sowie zwei Datenleitungen auf. Eine Übertragung erfolgt dann z.B. mit dem Schnittstellenstandard EIA/RS-485. Zur Sicherung der Übertragung sind die Binärdaten bei der Übertragung gemäß einer weiteren Ausführungsform mittels einer Kanalcodierung, z.B. mittels Hamming-Code, codiert.

Dank der Kommunikation der Steuereinheit mit der oder den Ausgabemitteln sowie der Steuereinheit mit dem oder den Messmodulen über ein Bussystem ist eine Erweiterbarkeit bzw. Anpassung des Messsystems an eine Vielzahl von Fahrzeugen möglich. Außerdem sind dank dem Bussystem für die Kommunikation der Komponenten der Wiegevorrichtung, die insbesondere die zentrale Steuereinheit, das oder die Ausgabemittel sowie das oder die Messmodule umfassen, nur eine geringe Anzahl von Verbindungsleitungen im Falle von durch Kabel verbundenen Komponenten nötig.

Gemäß einem weiteren Ausführungsbeispiel detektiert die Steuereinheit automatisch, dass neue Messmodule angeschlossen oder zuvor angeschlossene Messmodule entfernt wurden. Ferner ist gemäß einem weiteren Ausführungsbeispiel auch ein Programmieren der zentralen Steuereinheit möglich, sodass neue Messmodule in einfacher Weise zu einem bestehenden System hinzugefügt oder von einem bestehenden System getrennt werden können.

Gemäß einer weiteren vorteilhaften Ausführungsform der Erfindung weisen die Komponenten der Wiegevorrichtung Klebeflächen auf, mit denen die Komponenten jeweils an einem Fahrzeug anklebbar oder anhaftbar sind bzw. angeklebt oder angehaftet werden. Dank der Klebeflächen an den Komponenten der Wiegevorrichtung ist ein einfaches und schnelles Anbringen der Wiegevorrichtung an einem Fahrzeug möglich, ohne das Fahrzeug baulich zu verändern und damit z.B. die Stabilität des Fahrzeugs zu verringern. Ferner ist eine mit Klebeflächen an ein Fahrzeug angebrachte Wiegevorrichtung weitestgehend ohne Rückstände demontierbar.

Gemäß einer weiteren vorteilhaften Ausführungsform sind einige oder alle der Komponenten der Wiegevorrichtung mit einem Kunststoff in einem Gehäuse vergossen. Im Falle der Messmodule sind die Dehnungsmessstreifen derart im Messmodul vergossen, dass weiterhin der oder die Dehnungsmessstreifen der Messvorrichtung an einem Bauteil befestigbar sind und eine Verformung des mit dem jeweiligen Dehnungsmessstreifen, insbesondere durch eine Klebefläche, verbundenen Bauteils detektierbar ist.

Mit einem Kunststoff vergossene Komponenten der Wiegevorrichtung sind vorteilhaft, da die Komponenten bzw. die elektronischen Bauteile der Komponenten dank des Kunststoffvergusses vor schädlichen Umwelteinflüssen sowie Vibrationen geschützt sind.

Gemäß einer weiteren vorteilhaften Ausführungsform der Erfindung weist die Steuereinheit einen GPS-Empfänger, einen oder mehrere Beschleunigungssensoren, einen oder mehrere Speicher und/oder ein oder mehrere Kommunikationsmittel auf. Die Kommunikationsmittel umfassen z.B. einen oder mehrere Infrarotsender und/oder Infrarotempfänger, einen oder mehrere Funksender und/oder Funkempfänger und/oder ein oder mehrere Mobilfunkmodems, insbesondere für den GSM-, UMTS-, GPRS- und/oder HSDPA-Standard. Alternativ oder zusätzlich weist die zentrale Steuereinheit eine oder mehrere Schnittstellen zum Anschluss eines GPS-Empfängers, eines oder mehrerer Beschleunigungssensoren, eines oder mehrerer externer Speicher und/oder eines oder mehrerer Kommunikationsmittel auf. Weiter mögliche Schnittstellen sind z.B. eine oder mehrere USB-Schnittstellen, eine oder mehrere EIA/RS-232-Schnitstellen, eine oder mehrere EIA/RS-422-Schnitstellen, eine oder mehrere EIA/RS-485 Schnittstellen, eine oder mehrere Programmierschnittstellen und/oder beliebige, insbesondere zur Systemerweiterung, gestaltbare Schnittstellen.

Mit dem oder den GPS-Empfängern und dem oder den Speichern ist der Wert der Zuladungsmasse in Verbindung mit dem Ort, an dem sich das Fahrzeug befindet, zu jedem Zeitpunkt im Speicher der zentralen Steuereinheit abspeicherbar. Der zeitliche Verlauf, also die Historie, der Beladungsabläufe kann dank der Schnittstellen durch Verbinden eines Kabels, mittels einer Funkverbindung, mittels einer Mobilfunkverbindung oder mittels einer Infrarotverbindung abgerufen werden. Dank einem Beschleunigungssensor kann zusätzlich eine weitestgehend genaue Geschwindigkeit sowie Bremsungen oder Beschleunigungen des Fahrzeugs, die z.B. zu einem Verlust der Zuladung führen können, miterfasst und abgespeichert werden. Im Falle einer vorhanden Funk- und/oder Mobilfunkverbindung zu einer Kontrollstelle, wird die Kontrollstelle z.B. direkt über einen Verlust der Zuladung mit Ortsangabe und Uhrzeit sowie die für den Verlust ursächliche Fahrbewegung des Fahrzeugs informiert.

Ferner ist es dank der Schnittstellen und/oder den Kommunikationsmitteln sowie der Infrarotsender und -empfänger möglich, die zentrale Steuereinheit umzuprogrammieren und/oder mit einer weiteren zentralen Steuereinheit einer weiteren Wiegevorrichtung zu verbinden. Zudem ermöglichen das oder die Kommunikationsmittel und der oder die Speicher in der zentralen Steuereinheit Überladungszustände des Fahrzeugs, die an bestimmten Positionen bzw. zu bestimmten Zeitpunkten stattgefunden haben, aufzuzeichnen bzw. zu protokollieren.

Dank den kabellosen Kommunikationsmitteln, z.B. der Funksender, ist es auch möglich, eine Anzeige im Bereich einer Fahrerkabine ohne Kabelverbindung anzuordnen, mit der der Fahrer ständig die Zuladungsmasse erfassen kann. Das Mobilfunkmodem dient zudem zur Übertragung der Zuladungsmasse an eine Zentrale und somit der Anbindung an ein bestehendes Leitsystem bzw. "fleetmanagement" System.

Weitere Schnittstellen, wie z.B. USB-Schnittstellen oder EIA/RS-Schnittstellen, dienen z.B. zum Anschluss nicht in die zentrale Steuereinheit integrierter Speicher, GPS-Empfänger, und weiterer Kommunikationsmittel für die o.g. Zwecke.

Insbesondere dienen die Schnittstellen zum Anschluss externer Speicher, nämlich z.B. zum Anschluss von Speicherkarten, zum Aufzeichnen von Überladungszuständen mit oder ohne Orts- und/oder Zeitinformationen und zum Aufzeichnen von Fehlern, Störungen und Systemstatus.

Gemäß einer weiteren vorteilhaften Ausführungsform der Erfindung weist jedes Messmodul mindestens zwei oder mindestens vier Dehnungsmessstreifen auf. Im Falle eines Messmoduls mit mindestens zwei Dehnungsmessstreifen wird durch diese die Ausfallsicherheit des Systems im Falle eines einzigen ausfallenden Dehnungsmessstreifens verbessert. Im Falle von vier eingesetzten Dehnungsmessstreifen in einem Messmodul besteht die Möglichkeit des Aufbaus einer Wheatstoneschen Messbrücke zur Temperaturkompensation bei der Bestimmung der Verbiegung.

Weitere bevorzugte Ausführungsformen ergeben sich aus den Unteransprüchen sowie aus den anhand der Zeichnungen näher erläuterten Ausführungsbeispielen. Es zeigen:
- Fig. 1: ein Ausführungsbeispiel der erfindungsgemäßen Wiegevorrichtung und
- Fig. 2: ein Ausführungsbeispiel des erfindungsgemäßen Fahrzeugs mit einem Ausführungsbeispiel der Wiegevorrichtung.

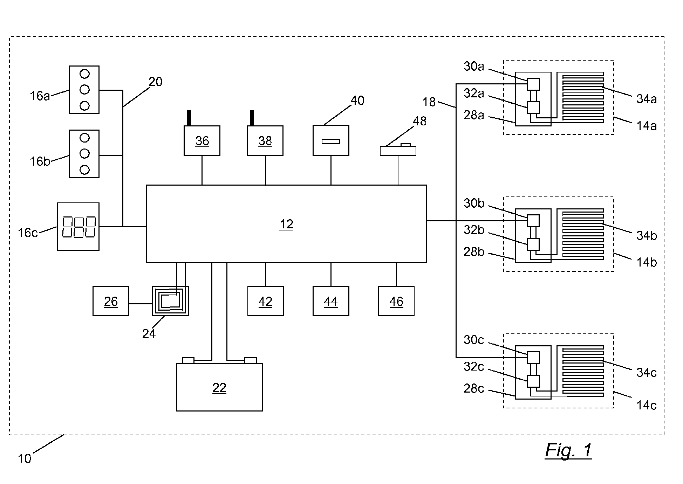

Fig. 1 zeigt ein Ausführungsbeispiel der erfindungsgemäßen Wiegevorrichtung 10 mit einer zentralen Steuereinheit 12, Messmodulen 14a bis 14c und Ausgabemitteln 16a bis 16c. Die zentrale Steuereinheit 12 ist über ein erstes Bussystem 18 mit den Messmodulen 14a bis 14c verbunden. Ferner ist die zentrale Steuereinheit 12 mit den Ausgabemitteln 16a bis 16c, hier mit zwei Ampeln 16a, 16b und einer Siebensegmentanzeige 16c, über ein zweites Bussystem 20 verbunden. Im gezeigten Ausführungsbeispiel sind zwei Bussysteme 18, 20 dargestellt, wobei gemäß einem anderem Ausführungsbeispiel auch ein einziges Bussystem 18, 20 zum Anschluss der Ausgabemitteln 16a bis 16c und der Messmodule 14a bis 14c an die zentrale Steuereinheit 12 dient.

Mit den Bussystemen 18, 20 werden die Komponenten, die an die zentrale Steuereinheit 12 angeschlossen sind, nämlich insbesondere die Ausgabemittel 16a bis 16c sowie die Messmodule 14a bis 14c, mit Spannung versorgt und es erfolgt eine Kommunikation über die Bussysteme 18, 20. Gemäß diesem Ausführungsbeispiel besitzt jedes der Bussysteme 18, 20 jeweils zwei Leitungen zur Spannungsversorgung und zwei Datenleitungen, wobei stellvertretend für diese vier Leitungen zur besseren Übersicht in Fig. 1 nur eine Leitung dargestellt ist. Gemäß anderen Ausführungsbeispielen weist das bzw. weisen die Bussysteme 18, 20 mehr oder weniger als vier Verbindungsleitungen auf.

Die Bussysteme 18, 20 werden gemäß dem Ausführungsbeispiel in Fig. 1 mit dem Schnittstellenstandard EIA/RS-485 betrieben, wobei gemäß anderen Ausführungsbeispielen andere Schnittstellenstandards genutzt werden. Die Kommunikation erfolgt dann über ein beliebig vordefinierbares systemeigenes paketbasierendes Binärprotokoll. Bei der Übertragung wird eine zyklische Redundanzprüfung (CRC) verwendet, um Fehler bei der Übertragung erkennen zu können.

Dank dem Bussystem ist es möglich, dass jedes Messmodul 14a bis 14c jeweils durch eine dem Messmodulen 14a bis 14c zugeordnete eigene Adresse angesprochen bzw. angesteuert werden kann. Die zentrale Steuereinheit 12 kommuniziert im dargestellten Ausführungsbeispiel über das erste Bussystem 18 mit den Messmodul 14a bis 14c und über das zweite Bussystem 20 mit den als Anzeigen ausgebildeten Ausgabemitteln 16a bis 16c, wobei die Messmodule 14a bis 14c und die Ausgabemittel 16a bis 16c von der zentralen Steuereinheit 12 jeweils separat angesprochen werden, um z.B. die aktuell mit dem jeweiligen Messmodul 14a bis 14c bestimmte Verbiegung abzufragen. Ferner ermöglichen die Bussysteme 18, 20 es der zentralen Steuereinheit 12 die Messmodule 14a bis 14c zu konfigurieren, zu steuern und/oder andere beliebige Daten von den Messmodulen 14a bis 14c abzufragen.

Geht man im vorliegenden Fall von einer 16 Bit Adressierung aus, so können 65.535 Messmodule 14 und 65.535 Ausgabemittel 16 mit den beiden Bussystemen 18, 20 adressiert werden, wenn eine Adresse, z.B. die Adresse 0, für die zentrale Steuereinheit 12 reserviert wird.

Ferner weist die Wiegevorrichtung 10 einen Energiespeicher 22 auf. Der Energiespeicher 22 ist im vorliegenden Fall als Akkumulator, insbesondere als Lithium-Ionen-Akkumulator oder als Lithium-Polymer-Akkumulator, ausgebildet, wobei der Energiespeicher 22 gemäß weiteren Ausführungsbeispielen eine Batterie oder ein Kondensator ist. Der Energiespeicher 22 ist mit der zentralen Steuereinheit 12 verbunden.

Im dargestellten Ausführungsbeispiel ist nur ein Energiespeicher 22 dargestellt, wobei die Wiegevorrichtung 10 gemäß einem weiteren Ausführungsbeispiel mehrere parallel oder in Reihe geschaltete Energiespeicher 22 aufweist.

Die zentrale Steuereinheit 12 sowie ein - hier zur besseren Übersicht nicht dargestellter - in die zentrale Steuereinheit 12 integrierter Hauptprozessor, z.B. ein 32 Bit Prozessor, zur Steuerung der Funktionen der zentralen Steuereinheit 12, werden mit dem Energiespeicher 22 mit Energie bzw. Spannung versorgt. Die Spannung bzw. die Kapazität des Energiespeichers 22 wird über einen - hier ebenfalls zur besseren Übersicht nicht dargestellten - Analog-Digital-Wandler der zentralen Steuereinheit 12, der z.B. in den Hauptprozessor integriert ist, gemessen und vom Hauptprozessor überwacht. Durch die Überwachung kann eine Tiefenentladung bzw. eine Überladung des Energiespeichers verhindert werden. Es wird z.B. ein Warnsignal von der zentralen Steuereinheit 12 ausgegeben, wenn der Energiespeicher 22 eine Spannung liefert, die unterhalb eines vorbestimmten Wertes liegt, so dass der Energiespeicher rechtzeitig getauscht oder geladen werden kann.

Die Energie des Energiespeichers 22 wird im vorliegenden Ausführungsbeispiel mit der zentralen Steuereinheit 12 über die Bussysteme 18 und 20 an die Ausgabemittel 16a bis 16c sowie die Messmodule 14a bis 14c zur Energieversorgung der Ausgabemittel 16a bis 16c sowie der Messmodule 14a bis 14c übertragen. Gemäß einem anderen Ausführungsbeispiel sind die Ausgabemittel 16a bis 16c sowie die Messmodule 14a bis 14c zur Kommunikation mit der zentralen Steuereinheit 12 nicht über ein Kabel bzw. eine Leitung mit der zentralen Steuereinheit 12 sondern z.B. über Funk verbunden. Bei dem zuletzt genannten Ausführungsbeispiel weist jedes der Messmodule 14a bis 14c bzw. jedes der Ausgabemittel 16a bis 16c einen eigenen Energiespeicher 22 zur Energieversorgung auf.

Im vorliegenden Ausführungsbeispiel der Fig. 1 ist die zentrale Steuereinheit zur Spannungsversorgung derart ausgebildet, um eine geregelte Spannung über die Bussysteme 18, 20 für die Ausgabemittel 16a bis 16c und die Messmodule 14a bis 14c zur Verfügung zu stellen, wobei die Spannung von der zentralen Steuereinheit 12 in einem Bereich von 3 bis 12 Volt regelbar ist.

Wird ein oder werden mehrere oder alle angeschlossenen Messmodule 14a bis 14c sowie die Ausgabemittel 16a bis 16c nicht benutzt, so kann die zentrale Steuereinheit 12 die Messmodule 14a bis 14c, die Ausgabemittel 16a bis 16c und/oder das ganze Bussystem 18, 20 abschalten, um Energie der Energiespeicher 22 zu sparen. Auch der Hauptprozessor der zentralen Steuereinheit 12 kann abgeschaltet und erst z.B. durch ein vordefiniertes Ereignis, wie etwa das Auslösen eines Tasters, wieder aktiviert werden.

Im vorliegenden Ausführungsbeispiel ist der Energiespeicher 22 als Akkumaltor ausgebildet und die Wiegevorrichtung 10 weist eine integrierte - wiederum nicht dargestellte Ladeschaltung - sowie ein an die zentrale Steuereinheit 12 angeschlossenes Lademittel 24 auf. An das Lademittel 24 ist zusätzlich eine Solarzelle bzw. Photovoltaikzellen 26 angeschlossen. Über das Lademittel 24, das mit der nicht dargestellten Ladeschaltung verbunden ist, wird ein Aufladen des Energiespeichers 22 ermöglicht. Das Lademittel 24 ist hier als Induktionsspule dargestellt, wobei das Lademittel 24 somit eine kontaktlose Ladung des Energiespeichers 22 durch eine weitere Spule mit einem geladenen Energiespeicher ermöglicht. Ferner ist an das Lademittel 24 ein Photovoltaikmodul 26 angeschlossen, das gemäß einem weiteren Ausführungsbeispiel direkt mit der Ladeschaltung der zentralen Steuereinheit 12 verbunden ist. Dieses Photovoltaikmodul 26 dient ebenfalls zum Laden des Energiespeichers 22 jedoch mit Sonnenenergie.

Gemäß dem Ausführungsbeispiel in Fig. 1 weisen die Messmodule 14a bis 14c Leiterplatten 28a bis 28c auf. Auf den Leiterplatten 28a bis 28c ist jeweils ein Mikrocontroller 30a bis 30c mit jeweils einem integrierten Analog-Digital-Wandler und einer Referenzspannungsquelle angeordnet. Zudem sind auf den Leiterplatten 28a bis 28c analoge Filter 32a bis 32c angeordnet. Ferner weisen die Messmodule 14a bis 14c jeweils einen Dehnungsmessstreifen 34a bis 34c auf. Die integrierten Analog-Digital-Wandler sowie die Referenzspannungsquellen sind in Fig. 1 zur besseren Übersicht nicht dargestellt.

Gemäß einem weiteren Ausführungsbeispiel weisen die Leiterplatten 28a bis 28c Mikrocontroller 30a bis 30c ohne integrierte Analog-Digital-Wandler und ohne Referenzspannungsquellen auf, wobei dann separate bzw. externe AnalogDigital-Wandler und Referenzspannungsquellen auf den Leiterplatten 28a bis 28c angeordnet sind. Ferner sind in Fig.1 die Leiterplatten 28a bis 28c zur besseren Übersichtlichkeit neben den Dehnungsmessstreifen 34a bis 34c dargestellt, wobei eine Anordnung der Leiterplatten 28a bis 28c an anderen Positionen, insbesondere oberhalb der Dehnungsmessstreifen 34a bis 34c, innerhalb der Messmodule 14a bis 14c gemäß weiteren Ausführungsbeispielen erfolgt.

Ferner sind die Leiterplatten 28a bis 28c und die Dehnungsmessstreifen 34a bis 34c jeweils in einem Gehäuse untergebracht, wobei die Dehnungsmessstreifen 34a bis 34c nicht oder zumindest nicht komplett von einer Gehäusewand eingeschlossen sind, sondern derart freiliegen, dass diese an einem Bauteil eines Fahrzeugs befestigbar sind. Das bzw. die Gehäuse sind jeweils mit einem Kunststoff, z.B. mit einem Kunststoff mit Polyurethan, vergossen und weisen Klebeflächen auf, um mit einem Fahrzeug verbunden zu werden.

Die Dehnungsmessstreifen 34a bis 34c sind jeweils mit den analogen Filtern 32a bis 32c elektrisch verbunden und die analogen Filter 32a bis 32c sind jeweils mit den Mikrocontrollern 30a bis 30c bzw. mit den Eingängen der Analog-DigitalWandler elektrisch verbunden. Ferner sind die nicht dargestellten Referenzspannungsquellen jeweils mit einem der Eingänge des Analog-Digital-Wandlers des jeweiligen Mikrocontrollers 30a bis 30c intern elektrisch verbunden. Die Mikrocontroller 30a bis 30c sind über das erste Bussystem 18 mit der zentralen Steuereinheit 12 elektrisch verbunden. Verbindungen der elektrischen Komponenten der Wiegevorrichtung 10 umfassen hier allgemein elektrische Verbindungen, die auch Verbindungen einschließen, die über elektrische Bauteile, wie z.B. Widerstände, Spulen oder Kondensatoren, erfolgen. Verbindungen der elektrischen Komponenten mit dem Fahrzeug sind hingegen Verbindungen, die durch Fügen, wie z.B. Verschrauben, Kleben, Schweißen und/oder Löten, hergestellt werden bzw. wurden.

Mit der Referenzspannungsquelle der Mikrocontroller 30a bis 30c wird im vorliegenden Ausführungsbeispiel jeweils eine Spannung an den Anschlüssen der Dehnungsmessstreifen erzeugt und gleichzeitig der durch die jeweiligen Dehnungsmessstreifen 34a bis 34c fließende Strom nach Filterung durch das jeweilige analoge Filter 32a bis 32c vom jeweiligen Analog-Digital-Wandler des jeweiligen Mikrocontrollers 30a bis 30c in ein digitales Signal gewandelt.

Analoge Filter 32a bis 32c sind z.B. Tiefpassfilter, die dazu dienen Schwankungen bzw. Variationen des durch die Dehnungsmessstreifen 34a bis 34c fließenden Stromes, die hohe Frequenzen aufweisen, zu unterdrücken. Mit den Mikrocontrollern 30a bis 30c erfolgen jeweils z.B. pro Sekunde zehn Messungen des Stromes, der durch die Dehnungsmessstreifen 34a bis 34c fließt. Das digitale Signal, das von den Analog-Digital-Wandlern der Mikrocontroller 30a bis 30c erzeugt wird, weist somit zehn Werte auf, die die Verformung bzw. den Grad der Verformung der Dehnungsmessstreifen 34a bis 34c in einem Zeitfenster einer Sekunde repräsentieren.

Eine Software im Mikrocontroller 30a bis 30c dient als digitales Filter, um aus den Werten bzw. Messwerten, die die Verformung repräsentieren, Werte, die z.B. stark von den übrigen Werten in einem vordefinierten Zeitbereich abweichen, herauszufiltern. Ferner wird mit dem digitalen Filter über vordefinierte Zeitfenster bzw. Zeitbereiche jeweils ein Mittelwert aus den Messwerten gebildet. Im oben ausgeführten Beispiel mit zehn Messwerten pro Sekunde berechnet die Software z.B. den Mittelwert über die zehn Messwerte pro Sekunde, sodass der Mikrocontroller 30a bis 30c nur noch einen Messwert pro Sekunde über das erste Bussystem 18 an die zentrale Steuereinheit übertragen muss.

Gemäß dem Ausführungsbeispiel sind die Bauteile der Messmodule 14a bis 14c derart ausgelegt, dass Temperaturschwankungen kompensiert werden. Diese Kompensation ist gemäß dem Ausführungsbeispiel so gewählt, dass die mit den Mikrocontrollern 30a bis 30c gemessenen Werte pro Grad Temperaturunterschied um weniger als zehn ppm, also ein tausendstel Prozent, abweichen.

Die Verbindungen, also die elektrischen Leitungen, auf denen analoge Signale innerhalb eines der Messmodule 14a bis 14c übertragen werden, sind gemäß dem Ausführungsbeispiel nicht länger als drei Zentimeter gewählt, um Störungen vorzubeugen.

Die mit den Mikrocontrollern 30a bis 30c am ersten Bussystem 18 ausgegebenen Signale mit den Werten, die die Verformung der Dehnungsmessstreifen 34a bis 34c angeben, werden der zentralen Steuereinheit 12 mit dem ersten Bussystem 18 zugeführt. Die zentrale Steuereinheit 12 ermittelt aus den von den Messmodulen 28a bis 28c erzeugten Signalen bzw. Werten der Signale die Zuladungsmasse des Fahrzeugs, mit dessen Bauteilen die jeweiligen Dehnungsmessstreifen 34a bis 34c der Messmodule 28a bis 28c verbunden sind. Dazu dient der nicht dargestellten Hauptprozessor der zentralen Steuereinheit 12 sowie hier nicht dargestellte interne Speicher der zentralen Steuereinheit 12. Mit den internen Speichern werden die von den Messmodulen 28a bis 28c erzeugten Signale bzw. die Werte oder Messwerte der Signale gespeichert.

Die Wiegevorrichtung 10 weist ferner ein über Schnittstellen der zentralen Steuereinheit 12 angeschlossenes Mobilfunkmodem 36 sowie einen GPS-Empfänger 38 auf. Der GPS-Empfänger 38 dient zur Positionsbestimmung der Wiegevorrichtung 10. Ferner dient ein empfangenes Zeitsignal, das ebenfalls mit dem GPS-Empfänger 38 empfangen werden kann, um die interne Systemzeit bzw. die sog. "real-time-clock" des Hauptprozessors der zentralen Steuereinheit 12 zu korrigieren.

Ferner dient ein in den GPS-Empfänger 38 integrierter Beschleunigungssensor zur Bestimmung der Beschleunigung der Wiegevorrichtung 10. Gemäß anderen Ausführungsbeispielen der Erfindung ist ein externer Beschleunigungssensor über eine Schnittstelle an die zentrale Steuereinheit 12 angebunden oder direkt in die zentrale Steuereinheit integriert.

Das Mobilfunkmodem 36, das z.B. nach dem GSM-, UMTS-, GPRS-, HSDPA-Standard arbeitet, dient zur Übertragung der gemessenen Gewichtsdaten bzw. der gemessenen bzw. ermittelten Zuladungsmasse und/oder zur Übertragung von mit dem GPS-Empfänger 38 empfangenen Positionen und/oder Zeitdaten. Ferner ermöglicht das Mobilfunkmodem 36 eine Steuerung und Konfiguration der Wiegevorrichtung 10, insbesondere der zentralen Steuereinheit 12, von einem externen System. Mit dem Mobilfunkmodem 36 ist eine Anbindung der Wiegevorrichtung 10 bzw. der zentralen Steuereinheit 12 an ein Flottenmanagementsystem bzw. ein "fleet-management" System möglich und erfüllt daher die Aufgabe eines Telemetriesystems.

Im dargestellten Ausführungsbeispiel sind das Mobilfunkmodem 36 und der GPS-Empfänger 38 an Schnittstellen der zentralen Steuereinheit angeschlossen. Gemäß weiterten Ausführungsbeispielen sind beide dieser Komponenten oder eine dieser Komponenten direkt in die zentrale Steuereinheit 12 integriert.

Ferner weist die Wiegevorrichtung 10 eine Schnittstelle 40 zum Anschluss eines externen Speichers auf. Als externer Speicher ist z.B. eine handelsübliche Speicherkarte denkbar. Die internen Speicher sowie auch externe Speicher dienen, um die Werte der Zuladungsmasse, die mit der zentralen Steuereinheit 12 ermittelt werden, zu speichern. Hierbei weist die Schnittstelle 40 den Vorteil auf, dass mit der Schnittstelle 40 verbundene externe Speicher leicht ausgetauscht werden können, um die Daten z.B. zu archivieren.

Ferner werden neben den aufgezeichneten Werten der Zuladungsmasse auch z.B. Positionsdaten, die mit dem GPS-System 38 bestimmbar sind und bei denen unzulässige Zuladungsmassen aufgetreten sind, in den internen und/oder externen Speichern gespeichert. Systemprotokolle zur Protokollierung von Fehlern, Störungen und Systemstatus werden ebenfalls in dem oder den Speichern abgelegt.

Ferner weist die Wiegevorrichtung 10 weitere Schnittstellen zum Anschluss externer Geräte, die zur besseren Übersicht nicht alle in Fig. 1 dargestellt sind, auf. Insbesondere weist die Wiegevorrichtung 10 die jedoch dargestellten Schnittstellen, nämlich eine USB-Schnittstelle 42, sowie eine EIA/RS 232-Schnittstelle 44 und eine Infrarotschnittstelle 46, auf. Die Infrarotschnittstelle 46 umfasst einen Infrarotempfänger und/oder einen Infrarotssender und dient zur kabellosen Übertragung von Daten zwischen der Wiegevorrichtung 10 und externen Geräten. Gemäß weiteren Ausführungsbeispielen weist die Wiegevorrichtung 10 weitere digitale und/oder analoge Ausgänge bzw. Schnittstellen 42 bis 46 auf.

Die Schnittstellen 42 bis 46 sind hier durch Kabelverbindung extern mit der zentralen Steuereinheit 12 verbunden. Gemäß weiteren Ausführungsbeispielen weist die zentrale Steuereinheit 12 jedoch alternativ oder zusätzlich eine in die zentrale Steuereinheit 12 integrierte Infrarotschnittstelle 46, eine in die zentrale Steuereinheit 12 integrierte USB-Schnittstelle 42 und/oder eine in die zentrale Steuereinheit 12 integrierte EIA/RS 232-Schnittstelle 44 auf.

Ferner weist die Wiegevorrichtung 10 einen an die zentrale Steuereinheit 12 angeschlossenen Taster 48 auf. Der Taster 48 ist gemäß einem weiteren Ausführungsbeispiel ebenfalls direkt in die zentrale Steuereinheit 12 integriert. Im dargestellten Ausführungsbeispiel ist ferner nur ein Taster 48 dargestellt, wobei die Wiegevorrichtung 10 gemäß weiteren Ausführungsbeispielen weitere externe Taster, Schalter oder Regler aufweist. Zur besseren Bedienbarkeit der an einem Fahrzeug installierten Wiegevorrichtung 10 sind derartige Taster 48 z.B. an mehreren Seiten des Fahrzeugs angeordnet, dessen Zuladung bestimmt werden soll. Taster 48 dienen z.B. zum Ein- und Abschalten der Wiegevorrichtung 10.

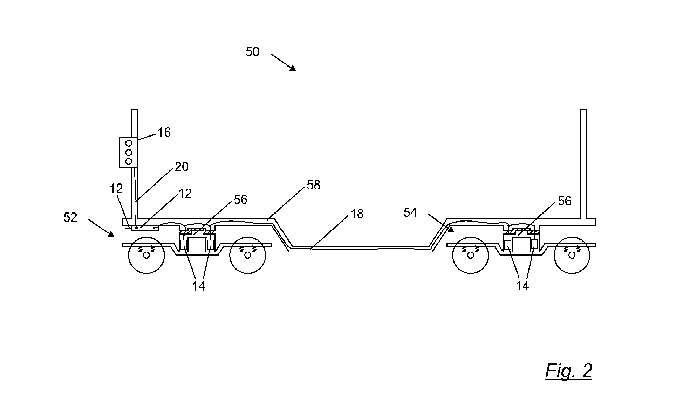

Fig. 2 zeigt ein Ausführungsbeispiel eines erfindungsgemäßen Fahrzeugs 50 mit einem Ausführungsbeispiel der erfindungsgemäßen Wiegevorrichtung 10. Das Fahrzeug 50 ist im vorliegenden Fall ein Waggon, nämlich ein Flachwaggon, der z.B. für den Holztransport geeignet ist.

Im vorderen Teil weist das Fahrzeug 50 bzw. der Waggon ein erstes Drehgestell 52 und im hinteren Teil ein zweites Drehgestell 54 auf. Im mittleren Teil der Drehgestelle 52, 54 sind sog. Wiegen jeweils mit einer Drehpfanne 56 angeordnet, auf denen das gesamte Gewicht der Ladefläche 58 des Fahrzeugs 50 aufliegt. Jede Wiege mit einer Drehpfanne 56 ist über eine Metallkonstruktion mit den Rädern des Fahrzeugs 50 verbunden. Das gesamte Gewicht der Ladefläche 58 wird somit über die Metallkonstruktion auf den Untergrund übertragen. Im Bereich dieser Metallkonstruktion sind vier Messmodule 14 mit den Dehnungsmessstreifen 34 aufgeklebt. Beim dargestellten Fahrzeug 50 werden vier Messmodule 14 verwendet, wobei abhängig vom Fahrzeugtyp mehr oder weniger als vier Messmodule 14 gemäß anderen Ausführungsbeispielen eingesetzt werden. Gemäß diesem Ausführungsbeispiel wurden die Messmodule 14 mit Polyurethankleber an den Drehgestellen 52, 54 fixiert.

Ferner ist die zentrale Steuereinheit 12 unterhalb der Ladefläche 58 und ein Ausgabemittel 16 an der vorderen Begrenzung der Ladefläche 58 angebracht. Auch das Ausgabemittel 16 sowie die zentrale Steuereinheit 12 sind in diesem Ausführungsbeispiel mit dem Fahrzeug 50 mittels Polyurethan kleber verbunden. Die Messmodule 14 sind über das erste Bussystem 18 und das Ausgabemittel 16 über das zweite Bussystem 20 mit der zentralen Steuereinheit 12 verbunden.

Die Leitungen bzw. Kabel der Bussysteme 18, 20 verlaufen in diesem Ausführungsbeispiel in nicht im Detail dargestellten U-Führungen, z.B. aus PVC, die mit einem Kleber, z.B. Polyurethankleber, am Fahrzeug 50 befestigt sind. Die Kabel der Bussysteme 18, 20, insbesondere die Datenleitungen, sind geschirmte elektrische Leitungen.

Die Komponenten der Wiegevorrichtung 10, nämlich zumindest die zentrale Steuereinheit 12, die Messmodule 14 und das Ausgabemittel 16, sind in Gehäusen untergebracht, die vergossen sind. Die Gehäuse bestehen im vorliegenden Ausführungsbeispiel aus Stahl und sind mit Polyurethan masse vergossen, um die Komponenten vor Vibrationen und Umwelteinflüssen sowie vor Vandalismus zu schützen. Gemäß anderen Ausführungsbeispielen bestehen die Gehäuse aus anderen Materialien und es werden andere Materialien für den Verguss verwendet.

Eine Messung mit dem in Fig. 2 dargestellten Ausführungsbeispiel der Wiegevorrichtung 10 erfolgt, indem zunächst die zentrale Steuereinheit 12 die Messmodule 14 über das Bussystem 18 in einen Messmodus schaltet. Die Messmodule 14 schalten ihre Analog-Digitalwandler sowie die Dehnungsmessstreifen 34 ein. Pro Sekunde werden mit den Analog-Digital-Wandlern jeweils zehn Messungen des Widerstandswertes der Dehnungsmessstreifen 34 vorgenommen.

Mit der Software der Mikrocontroller 30 werden aus den zehn Messungen pro Sekunde stark abweichende Werte herausgefiltert und Mittelwerte gebildet. Ferner messen die Mikrocontroller 30 die Umgebungstemperatur mit den in die Mikrocontroller 30 integrierten Temperaturfühlern. Mit der gemessenen Umgebungstemperatur erfolgt eine Fehlerkorrektur der durch Mittelwertbildung ermittelten Messwerte, insbesondere bzgl. der Versatz- bzw. Offset-Spannung sowie des Verstärkungswertes bzw. des Gains.

Die gefilterten Messwerte des Mikrocontrollers werden über das Bussystem 18 an die zentrale Steuereinheit 12 übermittelt, insbesondere nachdem die zentrale Steuereinheit 12 den Messwert eines, jedes oder aller Messmodule über das Bussystem 18 abgefragt hat.

In der zentralen Steuereinheit 12 werden die Ergebnisse bzw. Messwerte der Messmodule 14 addiert und daraus ein Mittelwert mit einem ersten digitalen Filter der zentralen Steuereinheit 12 gebildet, um mit einem zweiten digitalen Filter der zentralen Steuereinheit 12 weiterverarbeitet zu werden. Mit dem zweiten digitalen Filter der zentralen Steuereinheit 12 werden mehrere, insbesondere drei bis fünf, der Mittelwerte zu einem "Block" gesammelt und Differenzen bzw. Steigungen der einzelnen Wert zueinander ermittelt. Anhand vordefinierter Tolleranzbereiche der Differenzen bzw. Steigungen werden Mittelwerte, die die vordefinierten Tolleranzbereiche verlassen, aussortiert.

Das Ergebnis dieser digitalen Filterung der zentralen Steuereinheit 12 wird anhand einer zuvor durchgeführten Kalibrierung der Wiegevorrichtung 10 in ein Gewicht bzw. eine Masse umgerechnet. Das Gewicht entspricht dann der Zuladungsmasse bzw. dem Wert der Zuladungsmasse und wird mit dem zweiten Bussystem 20 als Information, insbesondere als weiteres digitales Signal, an das Ausgabemittel 16, nämlich die Anzeige 16, überführt, um diese Information, also die Zuladungsmasse, optisch darzustellen. In Fig. 2 wird das Gewicht anhand einer Anzeige 16 nach Art einer Ampel dargestellt, die abhängig von den Informationen, also der jeweiligen Zuladungsmassen und vordefinierter Schwellenwerte, ihre Farbe ändert.

Ferner wird die Zuladungsmasse in einem Speicher der zentralen Steuereinheit 12 gespeichert, wobei dank einem in die zentrale Steuereinheit integrierten GPS-Empfänger 38 mit den Werten der Zuladungsmasse auch Zeit, Datum und Ort des Fahrzeugs 50 mitgespeichert werden. Diese Daten werden z.B. ständig oder auf Anfrage über ein Mobilfunkmodem 36 oder ein Funkmodul an einen externen Empfänger gesendet bzw. übertragen.

Die o.g. Kalibrierung der Wiegevorrichtung 10 erfolgt z. B. bei der Installation der Wiegevorrichtung 10. Hierzu wird ein Fahrzeug 50, z.B. ein Waggon, mit vielen Einzelgewichten bis zu einem Maximalgewicht geladen, wobei die Massen der Einzelgewichte bekannt sein müssen. Die abhängig von der Beladung mit den Einzelgewichten von der zentralen Steuereinheit 12 angezeigten Werte werden dann um einen Faktor korrigiert, so dass diese Werte der tatsächlichen Zuladungsmasse entsprechen. Die Korrekturfaktoren werden daraufhin in einer Messkurve bzw. Kalibrierkurve gespeichert. Diese Mess- bzw. Kalibrierkurve dient dann zur o.g. Umrechnung in der zentralen Steuereinheit 12 beim späteren Einsatz der Wiegevorrichtung 10.

Gemäß einem weiteren Ausführungsbeispiel ist die zentrale Steuereinheit 12 mit einer weiteren zentralen Steuereinheit 12 eines weiteren Fahrzeugs 50 verbunden. Hierzu dienen die externen Schnittstellen der zentralen Steuereinheit 12, wie z.B. die o.g. digitalen und analogen Schnittstellen der zentralen Steuereinheit 12.

Die erfindungsgemäße Wiegevorrichtung 10 sowie das erfindungsgemäße Fahrzeug 50 und das erfindungsgemäße Verfahren dienen somit zur Messung des Gewichts bzw. der Zuladungsmenge eines Fahrzeugs 50, ohne das Fahrzeug baulich zu verändern und ohne das Fahrzeug örtlich an einen Ort für das Wiegen zu binden.

Alle in der vorgenannten Figurenbeschreibung, in den Ansprüchen und in der Beschreibungseinleitung genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Wiegevorrichtung (10) zur Ermittlung der Zuladungsmasse eines Fahrzeugs (50),
umfassend:
a) ein oder mehrere Messmodule (14) mit jeweils mindestens einem Dehnungsmessstreifen (34) zur Ermittlung der von der Zuladungsmasse eines Fahrzeugs (50) abhängigen Verformung bzw. Dehnung und/oder Stauchung eines oder mehrerer Bauteile des Fahrzeugs (50), wobei der oder die Dehnungsmessstreifen (34) zur Ermittlung mit dem oder den Bauteilen des Fahrzeugs (50) verbindbar sind,
b) eine mit dem oder den Messmodulen (14) kabellos oder kabelgebunden verbundene zentrale Steuereinheit (12) zur Ermittlung der Zuladungsmasse mittels der mit dem oder den Dehnungsmessstreifen (34) und dem oder den Messmodulen (14) ermittelten Verformungen,
c) ein oder mehrere mit der zentralen Steuereinheit (12) kabellos oder kabelgebunden verbundene Ausgabemittel (16) zur akustischen und/oder optischen Signalisierung und/oder Anzeige von Informationen, die abhängig von der mittels der zentralen Steuereinheit (12) ermittelten Zulandungsmasse sind.

2. Wiegevorrichtung nach Anspruch 1,
wobei die Wiegevorrichtung (10) einen oder mehrere Energiespeicher (22), z.B. eine Batterie, einen Akkumulator und/oder einen Kondensator, und die Wiegevorrichtung (10) im Falle eines wiederaufladbaren Energiespeichers (22) Lademittel (26), insbesondere zur induktiven, kapazitiven oder kabelgebundenen Energieübertragung, aufweist.

3. Wiegevorrichtung nach Anspruch 1 oder 2,
wobei das oder die Messmodule (14) zur Erzeugung von Werten bzw. Signalen, die die Verformung bzw. Verformungen repräsentieren, jeweils mindestens eine Referenzquelle zur Spannungs- oder Stromversorgung eines Dehnungsmessstreifens (34), mindestens ein analoges Filter (32), insbesondere ein Tiefpassfilter, zur Herausfilterung von Signalanteilen des durch den Dehnungsmessstreifen (34) fließenden Stromes und/oder der über dem Dehnungsmessstreifen abfallenden Spannung, mindestens einen Analog-Digital-Wandler zur Umwandlung des mit dem analogen Filter (32) gefilterten oder des ungefilterten durch den Dehnungsmessstreifen fließenden Stromes und/oder der mit dem analogen Filter (32) gefilterten oder der ungefilterten über dem Dehnungsmessstreifen (34) abfallenden Spannung in ein digitales Signal, mindestens ein digitales Filter zur Filterung, insbesondere durch Mittelwertbildung, der digitalen Signale, und/oder Temperaturkompensationsmittel mit einem Temperaturfühler zur Kompensation der von der Umgebungstemperatur abhängigen Variation der Werte des digitalen Signals aufweisen.

4. Wiegevorrichtung nach Anspruch 3,
wobei die zentrale Steuereinheit (12) Modulüberwachungsmittel zur Aufzeichnung der erzeugten Werte bzw. Signale eines, mehrer oder aller Messmodule (14), zur Detektion von Fehlern der Werte bzw. Signale, zur Korrektur oder Rekonstruktion der Fehler mittels aufgezeichneter fehlerfreier Werte bzw. Signale und/oder zur Abschaltung des oder der die fehlerhaften Werte bzw. Signale liefernden Messmodule (14) aufweist.

5. Wiegevorrichtung nach einem der vorhergehenden Ansprüche, wobei die zentrale Steuereinheit (12) mit der oder den Ausgabemitteln (16) über ein Bussystem (18, 20) und die zentrale Steuereinheit (12) mit dem oder den Messmodulen (14) über das gleiche oder ein weiteres Bussystem (18, 20) verbunden ist.

6. Wiegevorrichtung nach einem der vorhergehenden Ansprüche,
wobei das oder die Messmodule (14), die Steuereinheit (12) und/oder das oder die Ausgabemittel (16) mit einem Kunststoff vergossen sind und/oder die Komponenten Klebeflächen zum Aufkleben der Komponenten an ein Fahrzeug (50) aufweisen.

7. Wiegevorrichtung nach einem der vorhergehenden Ansprüche,
wobei die Steuereinheit (12) einen GPS-Empfänger (38), einen oder mehrere Beschleunigungssensoren, einen oder mehrere Speicher und/oder ein oder mehrere Kommunikationsmittel, insbesondere eine oder mehrere Infrarotschnittstellen (46), einen oder mehrere Funksender und/oder Funkempfänger, einen oder mehrere Taster (48) und/oder ein oder mehrere Mobilfunkmodems (36), insbesondere für den GSM-, UMTS-, GPRS- und/oder HSDPA-Standard, aufweist und/oder die Steuereinheit eine oder mehrere Schnittstellen, insbesondere eine oder mehrere USB-Schnittstellen (42), eine oder mehrere EIA/RS-232 und/oder EIA/RS-422 und/oder EIA/RS-485 Schnittstellen (44), eine oder mehrere Schnittstellen zum Anschluss externer Speicher (40), eine oder mehrere Schnittstellen zum Anschluss eines Beschleunigungssensors und/oder eine oder mehrere Programmierschnittstellen aufweist.

8. Wiegevorrichtung nach einem der vorhergehenden Ansprüche,
wobei jedes Messmodul (14) zwei oder vier Dehnungsmessstreifen (34) aufweist.

9. Fahrzeug (50), insbesondere Schienenfahrzeug, mit einer Wiegevorrichtung (10) nach einem der Ansprüche 1 bis 8, wobei die Komponenten, insbesondere die zentrale Steuereinheit (12), die Messmodule (14) und die Ausgabemittel (16), der Wiegevorrichtung (10) derart mit dem Fahrzeug (50) verbunden sind, dass die Dehnungsmessstreifen (34) Verbiegungen von Bauteilen des Fahrzeugs (50) aufnehmen, die abhängig von der Zuladungsmasse des Fahrzeugs (50) sind.

10. Wiegeverfahren zum Ermitteln der Zuladungsmasse mit einer Wiegevorrichtung (10) nach einem der Ansprüche 1 bis 8 oder einem Fahrzeug (50) nach Anspruch 9, mit den Schritten:
a) Ermitteln der von der Zuladungsmasse abhängigen Verformung eines oder mehrer Bauteile des Fahrzeugs (50) mit einem oder mehreren Messmodulen (14) mit jeweils einem oder mehreren Dehnungsmessstreifen (34),
b) Ermitteln der Zuladungsmasse mittels der mit dem oder den Dehnungsmessstreifen (34) und dem oder den Messmodulen (14) ermittelten Verformungen mit einer zentralen Steuereinheit (12),
c) akustisches und/oder optisches Signalisieren und/oder Anzeigen von Informationen mit einem oder mehreren Ausgabemitteln (16), wobei die Informationen abhängig von der mittels der zentralen Steuereinheit (12) ermittelten Zuladungsmasse sind.
